# EUROPÄISCHE PATENTSCHRIFT

(11) **EP 0 631 988 B1**
(45) Veröffentlichungstag und Bekanntmachung des Hinweises auf die Patenterteilung: **16.12.1998**
(21) Anmeldenummer: 94109528.3
(22) Anmeldetag: 21.06.1994
(51) Int. Cl.: C02F 1/26

(54) **Verfahren zur Reinigung von Abwässern der Aldolisierungsreaktion von n-Butyraldehyd**
Process for purification of waste waters from aldol condensation reaction of n-butyraldehyde
Procédé pour la purification d'eaux provenant de la réaction de condensation du type aldol de n-butylaldéhyde

(30) Priorität: 29.06.1993 DE 4321513
(43) Veröffentlichungstag der Anmeldung: 04.01.1995
(73) Patentinhaber: Celanese GmbH, 60439 Frankfurt (DE)
(72) Erfinder: Rötzheim, Mariola, Dipl.-Ing., D-45481 Mülheim (DE); Greb, Wolfgang, Dr. Dipl.-Ing., D-46535 Dinslaken (DE); Zgorzelski, Wolfgang, Dipl.-Ing., D-46149 Oberhausen (DE); Frohning, Carl Dieter, Dr. Dipl.-Chem., D-46485 Wesel (DE); Denkmann, Klaus, Dipl.-Ing., D-46147 Oberhausen (DE); Kalbfell, Heinz, Ing., D-46514 Schermbeck (DE)

(56) Entgegenhaltungen:
- EP-A- 0 385 826
- DE-A- 2 204 070
- FR-A- 2 243 158
- US-A- 4 306 884
- US-A- 4 401 570

## Beschreibung

Die Erfindung betrifft die Reinigung von Abwässern, die bei der Aldolisierung gleicher oder verschiedener Aldehyde oder Ketone oder bei der Mischaldolisierung von Aldehyden und Ketonen anfallen. Ziel des neuen Verfahrens ist es, den CSB-Wert der Abwässer zu vermindern.

Unter dem Begriff Aldolisierung werden im folgenden die Aldoladdition und die Aldolkondensation zusammengefaßt. Als Aldoladdition bezeichnet man die durch Basen oder Säuren katalysierte Addition aktivierter Methylengruppen an die Carbonylgruppen von Aldehyden oder Ketonen unter Bildung von β-Hydroxycarbonylverbindungen. Schließt sich der Aldoladdition eine Wasserabspaltung an, sie tritt leicht ein und ist die Regel bei der Verwendung saurer Katalysatoren, so spricht man von Aldolkondensation. Ihre Produkte sind α,β-ungesättigte Carbonylverbindungen.

Von besonderer Bedeutung ist die Aldolisierung von zwei Molekülen des gleichen Aldehyds oder des gleichen Ketons. Derartige Umsetzungen werden auch technisch genutzt. Ein Beispiel für die industrielle Anwendung der Aldolisierung ist die Herstellung von 2-Ethylhexanol, dem nach den niederen Alkoholen (Methanol bis Butanol) wichtigsten synthetischen Alkohol aus n-Butyraldehyd. Phthalsäureester des 2-Ethylhexanols finden in großem Umfang als Weichmacher für Kunststoffe Anwendung. Zur Gewinnung des Alkohols wird n-Butyraldehyd unter der Einwirkung wäßriger Natriumhydroxidlösung zu 2-Ethylhexenal umgesetzt. Nach Trennung des Aldolisierungsgemisches wäscht man den ungesättigten Aldehyd mit Wasser und hydriert ihn zu dem gewünschten Alkohol.

Im Verlauf des Herstellungsprozesses fallen als Abwässer die verbrauchte wäßrige Katalysatorlösung, das zur Reinigung des 2-Ethylhexenals verwendete Waschwasser sowie wasserhaltige Rückstände der 2-Ethylhexanol-Destillation an. Die vereinigten Abwässer enthalten alle wasserlöslichen Verunreinigungen, die in den einzelnen Verfahrensstufen auftreten, darunter auch hohe Anteile organischer Verbindungen, wie Butanol, Buttersäure, Butyrolacton, 2-Ethylhexenal, höhersiedende Kondensationsprodukte. Ihre Konzentration wird üblicherweise durch den CSB-Wert beschrieben. Der CSB-Wert (die Abkürzung CSB steht für "chemischen Sauerstoffbedarf") ist die als Sauerstoff-Äquivalent ausgedrückte Menge Kaliumdichromat, die von den oxidierbaren Inhaltsstoffen eines Liters Wasser verbraucht wird. Die Bestimmung des CSB-Wertes erfolgt nach einer normierten Arbeitsweise. Sie ist z.B. in Ullmanns Encyclopädie der technischen Chemie, 4. Auflage (1981), Bd. 6, Seiten 376 ff, beschrieben.

Ehe das Abwasser in konventionelle Reinigungsanlagen, in Flußläufe oder andere Vorfluter eingeleitet wird, muß sein Gehalt an organischen Verunreinigungen deutlich gesenkt werden, um den strengen Anforderungen des Gesetzgebers hinsichtlich der maximalen Schadstoffkonzentrationen in Abwässern zu genügen.

Es bestand daher die Aufgabe ein Verfahren zu entwickeln, mit dessen Hilfe die Konzentration organischer Verunreinigungen in den Abwässern erheblich herabgesetzt werden kann.

Erfindungsgemäß wird diese Aufgabe gelöst durch ein Verfahren zur Reinigung von Abwässern der Aldolisierungsreaktion von n-Butyraldehyd. Es ist dadurch gekennzeichnet, daß man die Abwässer auf einen pH-Wert von 0 bis 6 einstellt, eine sich abscheidende organische Phase gegebenenfalls abtrennt und die Abwässer anschließend mit Monoalkoholen, die 8 bis 16 Kohlenstoffatome im Molekül enthalten extrahiert.

Der neue Prozeß ist technisch einfach durchzuführen, läßt sich leicht unterschiedlichen Gegebenheiten anpassen und zeichnet sich durch hohe Wirtschaftlichkeit und Effektivität aus. Er ermöglicht, 90 und mehr Prozent der in den Abwässern enthaltenen organischen Verunreinigungen abzutrennen.

Als Extraktionsmittel werden erfindungsgemäß höhere Monoalkohole, das sind Alkohole mit 8 bis 16 Kohlenstoffatomen im Molekül eingesetzt. Sie können geradkettig oder verzweigt, gesättigt oder ungesättigt sein. Es ist nicht erforderlich, reine Alkohole zu verwenden. Geeignet sind auch Gemische aus isomeren Alkohlen oder aus Alkoholen unterschiedlicher Molekülgröße. Bewährt haben sich 2-Ethylhexanol, 3,5,5-Trimethylhexanol, Isooctylalkohol, Nonylalkohol, Decylalkohol und Isodecylalkohol und die Gemische der isomeren C₈-, C₉- und C₁₀-Alkohole.

Die erfindungsgemäß eingesetzten Alkohole haben sich als ausgezeichnete Extraktionsmittel für die in den genannten Abwässern üblicherweise enthaltenen organischen Substanzen erwiesen. Bedeutsam ist ferner, daß sie von der Wasserphase nur in untergeordneten Mengen gelöst werden.

Ein wichtiger Aspekt des neuen Verfahrens ist es, die im allgemeinen alkalischen Abwässer auf einen pH-Wert im Bereich von 0 bis 6, insbesondere 1 bis 3 einzustellen. Hierdurch wird ein nahezu vollständiger Übergang der organischen Komponenten aus der wäßrigen in die organische Phase erreicht. Überdies wird durch diese Maßnahme die Löslichkeit der Extraktionsmittel im Wasser weiter herabgesetzt. Es hat sich nämlich gezeigt` daß die Löslichkeit der Extraktionsmittel vom pH-Wert abhängt und in sauren Medien deutlich geringer als in alkalischen ist. Sie tragen daher in sauren Lösungen nur geringfügig zur Erhöhung des CSB-Wertes bei. Überdies werden in den Abwässern enthaltene carbonsaure Salze in die freien Säuren umgewandelt. Entsprechend ihrer Löslichkeit in Wasser bilden sie eine eigene Phase, die bereits vor dem Extraktionsschritt abgetrennt werden kann. Zur Einstellung des pH-Wertes verwendet man anorganische Säuren wie Salzsäure, Schwefelsäure, Salpetersäure oder Phosphorsäure, vorzugsweise Schwefelsäure.

Die Extraktion der organischen Verunreinigungen aus den Abwässern nach dem erfindungsgemäßen Verfahren erfolgt in den für die Solventextraktion üblichen Vorrichtungen. Bewährt haben sich Extraktoren, die einstufig oder mehrstufig als Extraktionsbatterien aus mehreren hintereinandergeschalteten Mischer-Scheider-Paaren ausgestaltet sind. Ebenso können Extraktionskolonnen mit ruhenden Einbauten wie Füllkörperkolonnen oder mit bewegten Einbauten wie Rührkolonnen, verwendet werden, wobei Extraktionsmittel und Trägerflüssigkeit im Gleichstrom oder bevorzugt im Gegenstrom geführt werden. Üblicherweise arbeitet man unter normalen Druck- und Temperaturbedingungen.

Das Extraktionsmittel läßt sich in einfacher Weise durch Destillation regenerieren und kann daher wiederholt eingesetzt werden. Durch Aufarbeitung des Destillationsrückstandes gewinnt man die im Abwasser enthaltenen organischen Substanzen.

Das neue Verfahren eignet sich zur Aufarbeitung von Abwässern der Aldolisierungsreaktion von n-Butyraldehyd, unabhängig vom angewandten Aldolisierungsverfahren. Die Aldolisierung kann also z.B. mit Alkalihydroxid, Alkalicarbonat oder Aminen als Katalysatoren durchgeführt worden sein.

In den nachfolgenden Beispielen wird die Erfindugn näher erläutert, jedoch nicht auf diese speziellen Ausführungsformen beschränkt.

### Beispiele 1 bis 8 (diskontinuierliche Extraktion)

Die Versuche werden mit dem bei der Herstellung von 2-Ethylhexanol (2-EH) aus Butyraldehyd anfallenden, stark alkalischen (pH-Wert: 12) Abwasser durchgeführt. Es ist ein Gemisch aus verbrauchter wäßriger Katalysatorlösung, dem zur Reinigung des Aldolproduktes verwendeten Waschwasser sowie den wasserhaltigen Rückständen der Alkoholdestillation.

Das Abwasser wird zunächst durch Zugabe konzentrierter Schwefelsäure auf einen pH-Wert von etwa 3 eingestellt. Anschließend scheidet man die Wasserphase von der nach Ansäuern entstandenen organischen Phase und extrahiert die Wasserphase mit 2-EH in unterschiedlichen Verhältnissen. Der Extraktion schließt sich eine Trennung von Alkohol- und Wasserphase an, die in etwa 15 min erfolgt. Darauf wird der CSB-Wert im gereinigten Abwasser bestimmt. Die Ergebnisse sind in der Tabelle zusammengestellt.

### Beispiel 9 (kontinuierliche Versuche)

Die Reinigung des in den Beispielen 1 bis 8 eingesetzten und auf pH 3 eingestellten Abwassers erfolgt in einem ARD-Extraktor der Fa. Luwa. Das Abwasser wird als kontinuierliche Phase von oben nach unten geführt, das Extraktionsmittel als disperse Phase im Gegenstrom dazu. Das Verhältnis Abwasser zu Extraktionsmittel beträgt 8 : 1. Der CSB-Gehalt wird von etwa 22 g/l auf 5 g/l reduziert.

**Tabelle**

| Beispiel | | 1 | 2 | 3 | 4 | 5 | 6 | 7 | 8 |
|---|---|---|---|---|---|---|---|---|---|
| Abwasser: 2-EH [l/l] | | 1:1 | 1:1 | 1:1 | 2:1 | 3:1 | 4:1 | 5.25:1 | 8:1 |

| CSB-Wert [g/l] | | | | | | | | | |
|---|---|---|---|---|---|---|---|---|---|
| Einsatz alkalisch | | 47 | 47.8 | 47.8 | 47.8 | 47.8 | 47.8 | 47.8 | 45 |
| Einsatz pH 3 | | 26 | 30.4 | 30.4 | 30.4 | 30.4 | 30.4 | 30.4 | 17.9 |
| nach Extraktion | 1. Stufe | 5 | 4 | 3.5 | 4.6 | 7.1 | 8.8 | 7.9 | 9.4 |
| | 2. Stufe | | | | | 3.5 | | | 6.4 |
| | 3. Stufe | | | | | 2.6 | | | |

| Abnahme des CSB-Wertes [%] | | | | | | | | | |
|---|---|---|---|---|---|---|---|---|---|
| 1. Stufe | | 89.4 | 91.6 | 92.7 | 90.4 | 85.1 | 81.6 | 83.5 | 79.1 |
| 2. Stufe | | | | | | 92.7 | | | 85.8 |
| 3. Stufe | | | | | | 94.6 | | | |

## Patentansprüche

1. Verfahren zur Reinigung von Abwässern der Aldolisierungsreaktion von n- Butyraldehyd, dadurch gekennzeichnet, daß man die Abwässer auf einen pH-Wert von 0 bis 6 einstellt und eine sich abscheidende organische Phase gegebenenfalls abtrennt und die Abwässer anschließend mit Monoalkoholen, die 8 bis 16 Kohlenstoffatome im Molekül enthalten, extrahiert.

2. Verfahren nach Anspruch 1, dadurch gekennzeichnet, daß man die Abwässer auf einen pH-Wert von 1 bis 3 einstellt.

3. Verfahren nach Anspruch 2, dadurch gekennzeichnet, daß die Einstellung des pH-Wertes mit Schwefelsäure erfolgt.

## Claims

1. A process for cleaning waste water from the aldolisation reaction of n-butyraldehyde, characterised in that the waste water is set to a pH of 0 to 6, and a precipitating organic phase is optionally separated off and the waste water is then extracted with monoalcohols containing 8 to 16 carbon atoms in the molecule.

2. The process according to claim 1, characterised in that the waste water is set to a pH of 1 to 3.

3. The process according to claim 2, characterised in that the pH is set with sulfuric acid.

## Revendications

1. Procédé de purification d'eaux résiduaires de la réaction d'aldolisation du n-butyraldéhyde, caractérisé en ce qu'on
ajuste le pH des eaux résiduaires à une valeur de 0 à 6 et qu'on sépare éventuellement une phase organique se séparant de celle-ci et finalement on extrait les eaux résiduaires avec des monoalcools qui contiennent de 8 à 16 atomes de carbone.

2. Procédé selon la revendication 1, caractérisé en ce qu'on ajuste le pH des eaux résiduaires à une valeur de pH de 1 à 3.

3. Procédé selon la revendication 2, caractérisé en ce qu'on effectue l'ajustement de la valeur du pH avec de l'acide sulfurique.
